## Europäisches Patentamt
## European Patent Office
## Office européen des brevets

(19)

(11) Veröffentlichungsnummer: **0 065 150 B1**

(12) **EUROPÄISCHE PATENTSCHRIFT**

(45) Veröffentlichungstag der Patentschrift:
19.03.86

(51) Int. Cl.⁴: **H 04 N 5/46**

(21) Anmeldenummer: 82103660.5

(22) Anmeldetag: 29.04.82

(54) **ZF-Verstärker für einen Mehrnormen-Fernsehempfänger.**

(30) Priorität: 20.05.81 DE 3120050

(43) Veröffentlichungstag der Anmeldung:
24.11.82 Patentblatt 82/47

(45) Bekanntmachung des Hinweises auf die Patenterteilung:
19.03.86 Patentblatt 86/12

(84) Benannte Vertragsstaaten:
**BE DE FR LU**

(56) Entgegenhaltungen:
**FR - A - 2 111 802**
**FR - A - 2 221 887**
**US - A - 3 872 387**

(73) Patentinhaber: **TELEFUNKEN Fernseh und Rundfunk GmbH, Göttinger Chaussee 76, D-3000 Hannover 91 (DE)**

(72) Erfinder: **Schmidtmann, Burchard, Ing. grad., Meistersingerweg 22, D-3013 Barsinghausen (DE)**
Erfinder: **Dener, Ali Cetin, Dipl.-Ing., Schiergrund 6, D-3257 Springe 1 (DE)**

(74) Vertreter: **Einsel, Robert, Dipl.-Ing., TELEFUNKEN Fernseh und Rundfunk GmbH Göttinger Chaussee 76, D-3000 Hannover 91 (DE)**

**Beschreibung**

Ein ZP-Verstärker für einen Fernsehempfänger muß bekanntlich eine bestimmte Frequenzdurchlaßkurve aufweisen, um vorgeschriebene Durchlaßbereiche und Sperrbereiche zu bilden. So sind z.B. für die Frequenz des Bildträgers eine definierte Anstiegsflanke, die sogenannte Nyquist-Flanke, für den zugehörigen Tonträger eine Durchlaßstelle mit einer definierten Absenkung und für Tonträger von Nachbarkanälen zur Unterdrückung dienende Nullstellen erforderlich. Auch an die Gruppenlaufzeitcharakteristik werden bei den einzelnen Normen bestimmte, unterschiedliche Anforderungen gestellt.

Es ist bekannt, die notwendige Frequenzdurchlaßkurve eines ZF-Verstärkers mit einem sogenannten Oberflächenwellenfilter (OWF) zu realisieren. Derartige Filter haben den Vorteil, daß kein Abgleich notwendig ist, weniger Montagearbeiten bei der Herstellung anfallen und in dem Empfänger weniger Raum benötigt wird. Das Oberflächenwellenfilter aus der US-A-3 872 387 ist in der Frequenz so großzügig ausgelegt, daß dem Oberflächenwellenfilter zwei begrenzende parallele Filter nachgeschaltet werden können, von denen jeweils eins in Betrieb ist. Das eine Filter mit größerer Frequenzdurchlaßkurve ist dann eingeschaltet, wenn der Sender nah ist und stark einfällt (Breitbandfilter), das andere Filter mit kleinerer Frequenzdurchlaßkurve ist dann eingeschaltet, wenn der Sender weiter entfernt steht und starkes Rauschen auftritt (Schmalbandfilter).

Bei einem Mehrnormen-Fernsehempfänger werden für die einzelnen Normen verschiedene Frequenzdurchlaßkurven benötigt, weil in den Normen verschiedene Parameter, z.B. der Frequenzabstand zwischen Bildträger und Tonträger, unterschiedlich sind. Aus der FR-A-2 221 887 ist bekannt, für einen Mehrnormenempfänger mehrere Filter parallel anzuordnen. Je nach empfangener Fernsehnorm wird eines dieser Filter angesteuert und durchgeschaltet, während die übrigen Filter abgeschaltet werden. Zur Erfüllung aller gestellten Anforderungen sind die mit diskreten Bauteilen aufgebauten Filter aufwandreich und erfordern bei der Serienfertigung einen individuellen Abgleich. Bei der Verwendung von Oberflächenwellenfiltern sind mehrere derartige, fest abgestimmte Filter notwendig, die wahlweise in den ZF-Signalweg eingeschaltet werden. Diese Lösung ist unwirtschaftlich, weil mit zunehmender Anzahl der Normen der Aufwand an Material und Abmessungen des Schaltungsaufbaus überproportional ansteigt.

Der Erfindung liegt die Aufgabe zugrunde, den Aufwand für die Erzielung der verschiedenen Frequenzdurchlaßkurven in einem ZF-Verstärker mit Oberflächenwellenfiltern zu verringern.

Diese Aufgabe wird durch die im Anspruch 1 beschriebene Erfindung gelöst. Vorteilhafte Weiterbildungen der Erfindung sind in den Unteransprüchen beschrieben.

Es wird also durch das einzige Oberflächenwellenfilter eine sogenannte Grunddurchlaßkurve geschaffen, wobei zunächst die Vorteile des Oberflächenwellenfilters für die Unterdrückung aller außerhalb der Durchlaßkurve liegenden Frequenzen voll ausgenutzt werden. Vorzugsweise ist diese Grunddurchlaßkurve so gewählt, daß sie für eine Norm ohne zusätzliche Filter oder mit wenigen Zusatzfiltern richtig ist. Durch die zusätzlichen Filter wird dann diese Grunddurchlaßkurve in relativ engen Grenzen derart modifiziert, daß die jeweils auftretenden Anforderungen an die Durchlaßbereiche und Sperrbereiche erfüllt werden. Es hat sich gezeigt, daß der Gesamtaufwand für ein einziges Oberflächenwellenfilter und die zusätzlichen umschaltbaren filter geringer ist als der Aufwand für jeweils ein getrenntes Oberflächenwellenfilter für jede der einzelnen Normen einschließlich der zugehörigen Umschalter. Die Erfindung ist z.B. vorteilhaft anwendbar für die Normen Standard L, L', Standard G, B und Standard C. Es ist auch eine Erweiterung auf andere Normen und Normenkombinationen möglich. Für die Herstellung der Mehrnormen-Fernsehempfänger braucht also nur noch ein einziges Oberflächenwellenfilter als Lagerteil bereitgestellt und eingebaut zu werden.

Ein Ausführungsbeispiel der Erfindung wird anhand der Zeichnung erläutert. Darin zeigen Figur 1 ein Blockschaltbild der erfindungsgemäßen Lösung, Figur 2 die Frequenzdurchlaßkurven für drei verschiedene Normen, Figur 3 Durchlaßkurven für eine andere Normenkombination und Figur 4 ein Schaltungsbeispiel für ein umschaltbares Filter mit dirkreten Bauteilen.

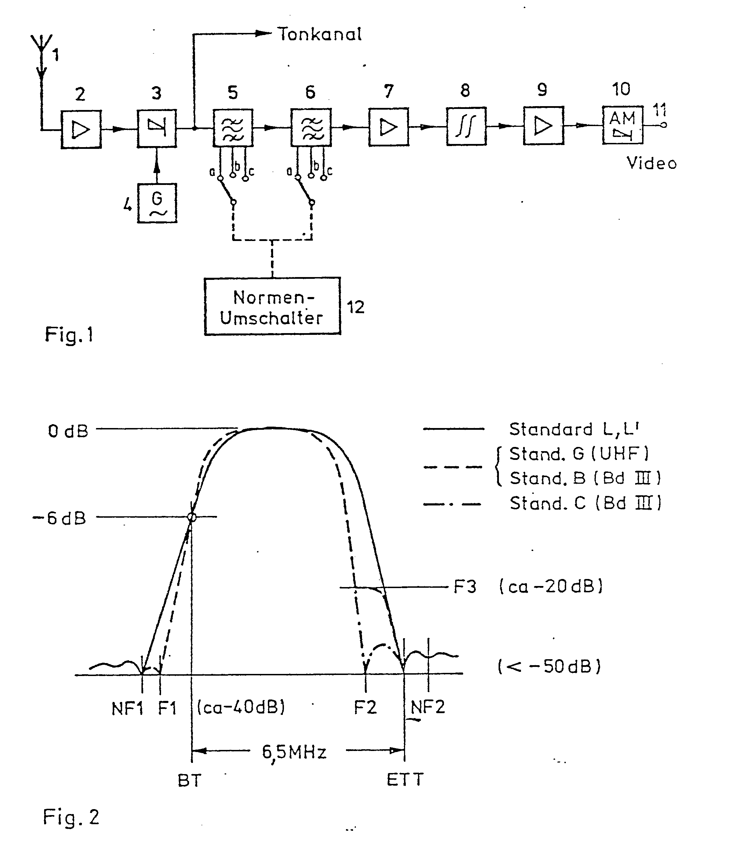

In Figur 1 wird sin Fernseh-Rundfunksignal von der Antenne 1 empfangen und über den HF-Verstärker 2 de Mischstufe 3 zugeführt, die außerdem von dem Oszillator 4 gespeist wird. Der ZF-Ausgang der Mischstufe 3 wird dem Tonkanal zugeführt, der als Parallelton- oder Quasi-Parallelton-Kanal ausgeführt sein kann. Für die Erzeugung des Videosignals für die Bildwiedergabe gelangt der ZF-Träger außerdem über die Filter 5,6 und der Verstärker 7 auf das Oberflächenwellenfilter 8. Dessen Ausgang ist über den Verstärker 9 an den Eingang des Videodemodulators 10 angeschlossen, der an der Klemme 11 das Videosignal für die Bildwiedergabe liefert.

Die Buchstaben a,b,c kennzeichnen bestimmte Teils in den Filtern 5,6, die eine Umschaltung der Frequenzdurchlaßkurven dieser Filter ermöglichen. Diese Umschaltung wird von der Steuerschaltung 12 entsprechend der jeweiligen Norm gesteuert. Die Schaltung 12 erkennt im Signal die jeweilige Norm, z.B. durch Auswertung des Frequenzabstandes zwischen Bildträger und Tonträger oder durch Auswertung der Zeilenfrequenz des Signals. Das Oberflächenwellenfilter 8 hat eine Grunddurchlaßkurve, die entsprechend der jeweiligen Norm durch die Filter 5,6 zur Erzielung der gewünschten Anforderungen geändert wird. Diese Anforderungen beziehen sich auf die Durchlaßbereiche bestimmte Flanken in der Durchlaßkurve abgesenkte Durchlaßstellen, Sperrstellen für unerwünschte Frequenzen und auf di Gruppenlaufzeitcharakteristik des insgesamt wirksamen Filters. Beim Standard B,G und C wirkt der frequenz selektive Teil a des Filters 6 so, daß das Restseitnband auf 0,75 MHz reduziert und dabei der Phasenlauf durch Allpaßfunktion der Schaltung auf der Bildträgerflanke korrigiert wird. Der Teil b des Filters 6 erzeugt eine Nullstelle zur Unterdrückung des Eigentonträgers (ETT) in einem Abstand von 5,5 MHz oberhalb des Bildträgers BT für Standard C, da wegen der AM-Tonübertragung bei dieser Norm das Tonsignal bereits am Ausgang der Mischstufe 3 zur getrennten Verarbeitung nach dem Paralleltonverfahren abgezweigt wird und im Bildkanal zur Vermeidung von Störungen in Form von Mischprodukten bei der Demodulation, Ton im Bild usw. wirksam unterdrückt werden muß. Beim Empfang von Sendungen nach dem Standard B und G wird dieselbe Nullstelle durch Bedämpfung mittels des Teils c auf einen günstigen Pegel von ca. -20 dB, bezogen auf das Maximum der Durchlaß-kurve gebracht, da bei diesen Normen der FM-Tonträger bis zur Differenztonbildung für 5,5 MHz bei der Demodulation den Bildkanal durchlaufen muß. Bei der Grundstellung wirkt das Filter 6 mit dem Teil b nur als zusätzliche Nullstelle auf den zugehörigen Tonträger ETT für Standard L im UHF-Bereich und L' im VHF-bereich Band III, wie bei Standard C wegen der AM-Tonübertragung auch bei diesen Normen. Andererseits wird der Teil a auf den Nachbarkanal unterhalb des ZF-Durchlaßbereiches umgeschaltet. Für Quasi-Paralleltonv erarbeitung bei FM-Tonübertragung wie beim Standard B,G kann der Teil b von der Steuerschaltung 12 so wirksam wie bei Standard C gesteuert werden.

Figur 2 zeigt die ZF-Durchlaßkurven für den Standard L, L' in der ausgezogenen Linie, für den Standard G im UHF-Bereich und den Standard B im Band III durch die gestrichelte Linie sowie für den Standard C im Band III durch die strichpunktierte Linie. Die Symbole haben folgende Bedeutung:

BT: Bildträger im ZF-Bereich

ETT: Eigentonträger, d.h. der zu dem Bildträger BT gehörende Tonträger, im ZF-Bereich

NF1: Nullstelle für den Ton-ZF-Träger des Nachbarkanals

F1: Nullstelle, die durch den Teil a des Filters 6 bei Standard B,G und C erzeugt wird

F2: Nullstelle, die durch den Teil b des Filters 6 erzeugt wird

F3: Nullstelle, die durch die Teile b und c des Filters 6 erzeugt wird.

Bei Standard L, L' liegt F1 unterhalb von NF1, wobei die Nullstelle F2 bei dem Eigentonträger ETT wirksam ist.

Von den Normen G,B und C unterscheiden sich die französischen Normen L im UHF-Bereich und L' im VHF-Bereich Band III unter anderem im Bild-Tonträgerabstand (6,5 MHz), in Gruppenlaufzeitcharakteristik (nicht vorentzerrter Gruppenlaufzeit-Frequenzgang) und in der Breite des Restseitenbandes (1,25 MHz). Da der Standard L' im Band I gegenüber Band III mit umgekehrter Einordnung von Bild- und Tonträger (Bildträger oberhalb des Tonträgers) gesendet wird und die Oszillatorfrequenzen zur Bildung der gewünschten Zwischenfrequenz oberhalb der Empfangsfrequenzen liegen müssen, ergibt sich zwangsläufig im ZF-Bereich die in Fig. 2 voll ausgezogen dargestellte Frequenzdurch-laßkurve. Diese wird auch im UHF-Bereich und im VHF-Bereich Band III durch Umschalten der Oszillatorfrequenzen (unterhalb der Empfangsfrequenz) beibehalten.

Wegen der gegensätzlichen Einordnung von Bild- und Tonträger im Band I ergibt sich hier bei Standard B gegenüber Standard L' eine umgekehrte ZF-Lage, d.h. der Bildträger liegt oberhalb des Tonträgers. Die gleiche Durchlaßkurve wie in Fig. 2 ausgezogen gezeichnet wird auch für Standard B im Band I benutzt, jedoch umgekehrt, d.h. die vorherige Tonträgerflanke zur Nyquist-Flanke gemacht. Der Schnittpunkt der pegellinie bei 6 dB mit der diesseitigen Kurvenflanke wird für den Bildträger festgelegt. Da wegen der AM-Tonübertragung die Grundkurve auf dieser Seite bereits einen linearen Verlauf hat, kann auf eine Linearisierung verzichtet werden. Sonst ist eine Linearisierung mit der Nullstelle, die bei Standard L' auf den Eigentonträger ETT wirksam ist und jetzt auch den Phansenverlauf für Standard B korrigiert, möglich.

Das Filter 5 sorgt für die notwendige Tontreppe im Abstand von 5,5 MHz unterhalb des Bildträgers auf der Bildträgerflanke für Standard L' im UHF-Bereich sowie im Band III. Bei Standard L' wird diese Wirkung von der Steuerschaltung 12 aufgehoben. Gegebenenfalls kann das Filter 5 ebenso wie das Filter 6 auch für einen Standard C-Empfang im Band I erweitert werden.

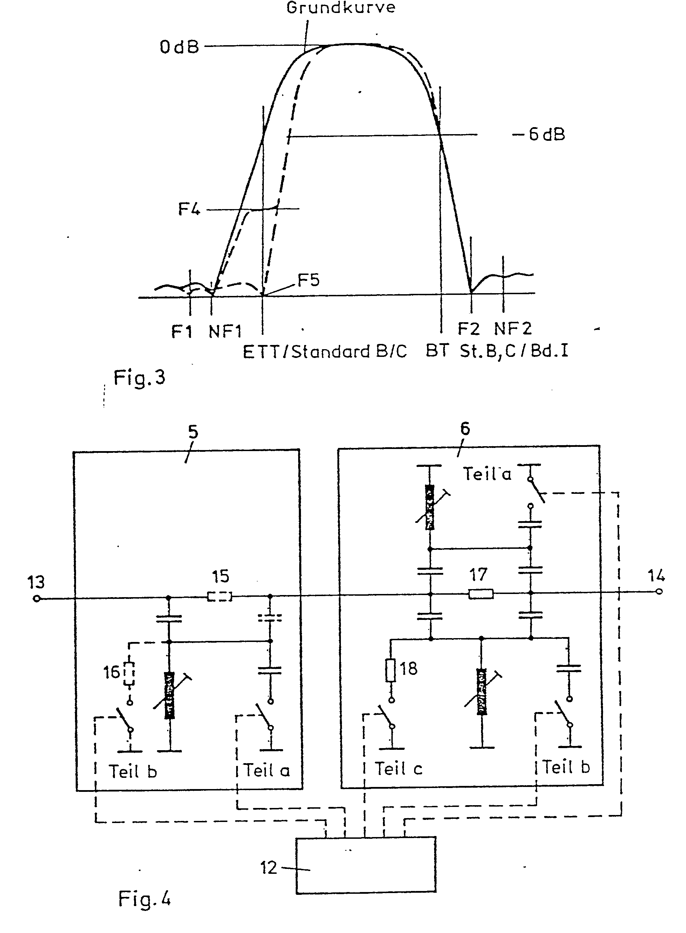

In Figur 3 sind alle Frequenzdurchlaßkurven für den Empfang im Band I dargestellt. Die gezeigten Symbole haben folgende Bedeutung:

F4: Nullstelle durch die Teile a und b des Filters 5

F5: Nullstelle durch Teil a des Filters 5.

Bei Standard L' im Band I liegt F5 unterhalb von NF1, und F2 ist wie in Figur 2 wirksam.

Figur 4 zeigt eine Schaltung mit diskreten Bauteilen zur Realisierung der Filter 5,6. Diese Schaltungen bestehen im wesentlichen aus Saugkreisen mit und ohne Kompensation 1. Die Widerstände 15,17 dienen zur Kompensation des Verlustwiderstandes der zugehörigen Induktivitäten. Die Teile a,b,c, die in der beschriebenen Weise die Umschaltung in der Durch-laßkurve in den Filtern 5,6 bewirken, sind hier in Form von einschaltbaren Bauteilen dargestellt. Sie werden durch die Steuerschaltung 12 entsprechend der jeweiligen Norm betätigt. Die Schaltung nach Figur 4 ist mit ihrer Eingangsklemme 13 und ihrer Ausgangsklemme 14 in den Signalweg eingeschaltet, d.h. zwischen dem Ausgang der Mischstufe 3 und dem Eingang des Verstärkers 7 oder des Oberflächenwellenfilters 8 in Figur 1. Die Widerstände 16,18 sind Bedämpfungswiderstände für die angeschlossenen selektiven Netzwerke.

## Patentansprüche

1. ZF-Verstärker mit Oberflächenwellenfilter, <u>dadurch gekennzeichnet</u>, daß zur Erzielung von gewünschten Frequenzdurchlaßkurven für verschiedene Normen eines Mehrnormen-Fernsehempfängers ein Oberflächenwellenfilter (8) verwendet wird, welches für die Norm mit der größten ZF-Bandbreite bemessen ist, und daß die Durchlaßkurven für die anderen Normen durch zusätzliche in den Signalweg eingeschaltete Filter (5,6) gebildet sind, die durch diskrete Bauteile (a-c) wahlweise zusammenschaltbar sind.

2. ZF-Verstärker nach Anspruch 1, <u>dadurch gekennzeichnet</u>, daß die diskreten umschaltbaren Bauteile (a-c) auf zwei in Reihe geschaltete Filter (5,6) verteilt sind.

3. ZF-Verstärker nach Anspruch 1, <u>dadurch gekennzeichnet</u>, daß die Filter (5,6) so umschaltbar sind, daß die Zuordnung von Bildträger (BT) und zugehörigem Tonträger (ETT) zu der ansteigenden und abfallenden Flanke der ZF-Durchlaßkurve vertauschbar ist.

## Claims

1. Intermediate frequency amplifier having a surface wave filter, <u>characterized in that</u> for the purpose of achieving desired frequency transfer characteristics for different norms of a multi-norm television receiver a surface wave filter (8) is utilised which is dimensioned for the norm with the largest intermediate frequency band width, and that the transfer characteristics for the other norms are built up by additional filters (5, 6) switched into the signal path, which filters are selectively switchable together by means of separate components (a-c).

2. Intermediate frequency amplifier according to Claim 1, <u>characterized in that</u> the separate switchable components (a-c) are distributed in two filters (5, 6) connected in series.

3. Intermediate frequency amplifier according to Claim 1, <u>characterized in that</u> the filters (5, 6) are so switchable that the relationship of the picture carrier (BT) and the respective sound carrier (ETT) to the rising and falling flanks of the intermediate frequency transfer characteristic can be exchanged.

## Revendications

1. Amplificateur à fréquence intermédiaire avec filtre d'ondes de surface, caractérisé en ce que, pour obtenir les courbes de passage de fréquences désirées pour différentes normes d'un recepteur de télévision à plusieurs normes, on utilise un filtre d'ondes de surface (8) qui est dimensionné pour la norme ayant la plus grande largeur de bande à fréquence intermédiaire et en ce que les courbes de transmission pur les autres normes sont constituées par des filtres additionnels (5,6) connectés dans la voie de transmission de signaux et qui peuvent être commutés sélectivement par des composants discrets (a-c).

2. Amplificateur à fréquence intermédiaire selon la revendication 1, caractérisé en ce que les composants commutables discrets (a-c) sont répartis dans deux filtres (5, 6) connectés en série.

3. Amplificateur à fréquence intermédiaire selon la revendication 1, caratérisé en ce que les filtres (5, 6) sont commutables de façon à pouvoir changer la relation entre une porteuse image (BT) et une porteuse son associée (ETT) et les flancs croissant et décroissant de la courbe de transmission à fréquence intermédiaire.

⌐12

Fig.1

Fig. 2

2|2

Grundkurve

0 dB

−6 dB

F4

F5

F1  NF1

F2  NF2

ETT/Standard B/C    BT St.B,C / Bd.I

Fig.3

5

6

Teil a

13

15

17

14

16

18

Teil b

Teil a

Teil c

Teil b

12

Fig.4